(19) **Europäisches Patentamt / European Patent Office / Office européen des brevets**

(11) **EP 2 454 478 B1**

(12) # EUROPEAN PATENT SPECIFICATION

(45) Date of publication and mention
of the grant of the patent:
**28.10.2015 Bulletin 2015/44**

(21) Application number: **11728692.2**

(22) Date of filing: **30.05.2011**

(51) Int Cl.:
*F03D 9/00* (2006.01)          *F03D 11/02* (2006.01)

(86) International application number:
**PCT/JP2011/003000**

(87) International publication number:
**WO 2011/148652 (01.12.2011 Gazette 2011/48)**

(54) **POWER GENERATING APPARATUS OF RENEWABLE ENERGY TYPE AND METHOD OF OPERATING THE SAME**

VORRICHTUNG ZUR STROMERZEUGUNG AUS ERNEUERBARER ENERGIE UND BETRIEBSVERFAHREN DAFÜR

APPAREIL DE PRODUCTION D'ENERGIE DE TYPE ENERGIE RENOUVELABLE ET PROCEDE DE FONCTIONNEMENT CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 PCT/JP2010/006979**
**30.11.2010 PCT/JP2010/006978**
**30.11.2010 PCT/JP2010/006982**
**28.05.2010 GB 201009012**
**28.05.2010 GB 201009013**

(43) Date of publication of application:
**23.05.2012 Bulletin 2012/21**

(73) Proprietor: **Mitsubishi Heavy Industries, Ltd.**
**Tokyo 108-8215 (JP)**

(72) Inventors:
- **ICHINOSE, Hidekazu**
  **Tokyo 108-8215 (JP)**
- **TSUTSUMI, Kazuhisa**
  **Tokyo 108-8215 (JP)**
- **SHIMIZU, Masayuki**
  **Tokyo 108-8215 (JP)**

- **CALDWELL, Niall**
  **Midlothian**
  **Lothian EH20 9TB (GB)**
- **DUMNOV, Daniil**
  **Midlothian**
  **Lothian EH20 9TB (GB)**
- **RAMPEN, William**
  **Midlothian**
  **Lothian EH20 9TB (GB)**
- **LAIRD, Stephen**
  **Midlothian**
  **Lothian EH20 9TB (GB)**
- **PAPPALA, Venkata**
  **London**
  **Greater London W1K 6WL (GB)**

(74) Representative: **Hindle, Alistair Andrew**
**Alistair Hindle Associates Ltd.**
**66 Hanover Street**
**Edinburgh EH2 1EL (GB)**

(56) References cited:
**WO-A1-2007/053036      JP-A- 2005 248 738**
**US-A- 4 280 061      US-A- 4 496 847**
**US-A1- 2010 040 470**

## Description

### Technical Field

This invention relates to a power generating apparatus of renewable energy type which transmits rotation energy of a rotor obtained from a renewable energy source to a generator via a hydraulic transmission having a combination of a hydraulic pump and a hydraulic motor and an operation method of the power generating apparatus of renewable energy type.

### Background Art

In recent years, from a perspective of preserving the environment, it is becoming popular to use power generating apparatuses of renewable energy type such as a wind turbine generator utilizing wind power and a tidal current generator utilizing tidal current.

Such renewable energy devices traditionally employ a transmission in the form of a gearbox to change the slow input speed of an energy extraction mechanism such as the rotor of the wind or tidal turbine generator to which kinetic energy of the renewable energy source is inputted into a fast output speed to drive a power generating apparatus. For example, in a common wind turbine generator, the rotation speed of the rotor is approximately a few rotations to tens of rotations per minute, whereas a rated speed of the power generating apparatus is normally 1500rpm or 1800rpm and thus a mechanical gearbox. Thus, a mechanical gearbox is provided between the rotor and the generator. Specifically, the rotation speed of the rotor is increased to the rated speed of the generator by the gearbox and then inputted to the generator.
Such transmission in the form of the gearbox is challenging to design and build as they are prone to failure and expensive to maintain and replace or repair.

A further challenge in designing power generating apparatuses of renewable energy type is extracting the optimum amount of energy by an energy extraction mechanism in all conditions. The most effective devices achieve this by holding the blades at a fixed pitch angle, and varying the rotational speed of the blades proportionally to the wind or water speed over the majority of the operating range, so as to maintain a more or less constant 'tip speed ratio'. Gearboxes at the scale required for cost effective power generating apparatuses of renewable energy type are invariably fixed ratio, so complex and failure-prone electronic power conversion is required to provide electricity to an AC electricity network.

In recent years, power generating apparatuses of renewable energy type equipped with a hydraulic transmission adopting a combination of a hydraulic pump and a hydraulic motor of variable displacement type are getting more attention as an alternative to the mechanical gearboxes. In such power generating apparatuses, it is possible to make the hydrostatic transmission variable ratio even at large scales. Suck a hydrostatic transmission is also lighter and more robust than a gearbox, and lighter than a direct generator drive unit. Thus, the overall cost of producing electricity is reduced.

For instance, Patent Literature 1 describes a wind turbine generator adopting a hydraulic transmission constituted of a hydraulic pump rotated by a rotor, a hydraulic motor connected to a generator, and an operating oil path arranged between the hydraulic pump and the hydraulic motor. In the hydraulic transmission of this wind turbine generator, the hydraulic pump is constituted of plural sets of a pistons and cylinder, cams which periodically reciprocate the pistons in the cylinders, and high pressure valves and low pressure valves which open and close with the reciprocation of the pistons. By latching the piston near a top dead center, a working chamber surrounded by the cylinder and the pistons is disabled to change the displacement of the hydraulic pump.

Further, Patent Literature 2 discloses an apparatus for regulating the rotation of a rotor of a wind turbine generator. The apparatus includes a rotating shaft driven by the rotor and multistage pumps activated by the rotating shaft. Each stage has intake means coupling a common fluid intake line with the stage and discharge means coupling a common fluid discharge line with the stage. A first constricting means is arranged in the common discharge line from the stage to change the pumping status of the stages. The ratio of cylinders in idling state is changed to adjust torque of the rotating shaft so as to maintain the rotation speed of the rotating shaft within the range in which the rotation energy is effectively converted into wind power energy is effectively.

US 4280061 discloses another power generating apparatus according to the prior art.

### Citation List

### Patent Literature

PTL 1: US 2010/0040470A
PTL 2: US 4496847B

## Summary of Invention

### Technical Problem

In the power generating apparatuses of renewable energy type such as those disclosed in Patent Literatures 1 and 2, it is required to extract energy efficiently from the renewable energy source and to maintain power generation efficiency high. However, the renewable energy source used in such power generating apparatuses are normally natural energy such as wind power and tidal current and energy available for power generation fluctuates significantly. Thus, it is difficult to perform energy extraction at maximum efficiency. Particularly, the renewable energy is highly temporally-unstable in a short period of time and it is necessary to perform the control in response to the fluctuating energy in order to extract energy efficiently.

Patent Literature 2 proposes to adjust the torque of the rotating shaft to maintain the rotation speed of the rotating shaft within the range in which the wind power energy is converted efficiently but fails to disclose how to adjust the torque in details. It is not yet established as to an operation control technique to obtain desired torque of the rotating shaft rapidly in response to changing of the renewable energy.

In view of the problems above, it is an object of the present invention is to provide a power generating apparatus of renewable energy type which obtains desired torque of the rotating shaft rapidly in response to changing of the renewable energy as well as a method of operation such an apparatus.

### Solution to Problem

The present invention provides a power generating apparatus of renewable energy type which generates power from a renewable energy source. The power generating apparatus in relation to the present invention may include, but is not limited to: a rotating shaft driven by the renewable energy source; a hydraulic pump of variable displacement type driven by the rotating shaft; a hydraulic motor which is driven by pressurized oil supplied from the hydraulic pump; a generator coupled to the hydraulic motor; a high pressure oil line through which a discharge side of the hydraulic pump is in fluid communication with an intake side of the hydraulic motor; a pump demand determination unit which determines a displacement demand $D_p$ of the hydraulic pump based on a target torque of the hydraulic pump and an oil pressure in the high pressure oil line; and a pump controller which adjusts displacement of the hydraulic pump to the determined displacement demand $D_p$.

In the power generating apparatus of renewable energy type, the pump demand determination unit determines the displacement demand $D_p$ of the hydraulic pump based on the target torque of the hydraulic pump and the oil pressure in the high pressure oil line, and the pump controller adjusts the displacement of the hydraulic pump to the determined displacement demand $D_p$. Thus, it is possible to obtain desired torque, i.e. optimal torque which is optimum for extracting energy efficiently from the renewable energy source. In particular, the target torque of the hydraulic pump is changed in response to changes of renewable energy so as to regulate the torque rapidly to follow fluctuations of the renewable energy.

The oil pressure in the high pressure oil line as described above is used for the pump controller to determine the displacement demand $D_p$ of the hydraulic pump. The oil pressure in the high pressure oil line may be an actual value or a set value (target pressure) of the pressure of the hydraulic oil.

The power generating apparatus of renewable energy type as described above, may also include a target torque determination unit which determines the target torque of the hydraulic pump based on an ideal torque of the rotating shaft at which a power coefficient becomes maximum.

The target torque determination unit determines the target torque of the hydraulic pump based on the ideal torque of the rotating shaft at which the power coefficient becomes maximum. Thus, it is possible to maintain the power generation efficiency high in the power generating apparatus of renewable energy type.

The power generating apparatus of renewable energy type as described above, may also include a rotation speed meter which measures a rotation speed of the rotating shaft, and an ideal torque determination unit which determines the ideal torque of the rotating shaft in accordance with the measured rotation speed of the rotating shaft.

In the power generating apparatus of renewable energy type, the ideal torque of the rotating shaft is determined in accordance with the measured rotation speed of the rotating shaft, thereby improving the power generation efficiency of the power generating apparatus of renewable energy type. The rotation speed of the rotating shaft can be measured with high accuracy by the rotation speed meter. Thus, it is possible to control the hydraulic pump appropriately by determining the ideal torque based on the measured rotation speed of the rotating shaft.

In the power generating apparatus of renewable energy type, preferably a plurality of the rotation speed meters are provided and the ideal torque determination unit determines the ideal torque of the rotating shaft in accordance with an average of the rotation speeds of the rotating shaft measured by the rotation speed meters.

In this manner, the rotation speed meters are provided so as to improve accuracy of calculating the ideal torque and also to remove the noise due to the rotation speed meters themselves, external factors or the like.

Alternatively, the power generating apparatus of renewable energy type may also include a rotation speed meter which measures a rotation speed of the rotating shaft, and an ideal torque determination unit which determines the ideal torque of the rotating shaft in accordance with an estimated speed of energy flow of the renewable energy source estimated from the measured rotation speed of the rotating shaft.

In this manner, the ideal torque is obtained based on the estimated speed of the energy flow of the renewable energy estimated from the measured rotation speed of the rotating shaft. Thus, it is possible to improve the power generation efficiency of the power generating apparatus of renewable energy type. The speed of the energy flow is estimated from the rotation speed measured by the rotation speed meter. Thus, it is possible to estimate the speed of the energy flow with high accuracy and to control the hydraulic pump appropriately. It is also possible to configure the power generating apparatus without a flow speed meter which measures the speed of the energy flow, thereby reducing the cost.

In the power generating apparatus of renewable energy type, preferably a plurality of the rotation speed meters are provided and the estimated speed of the energy flow is estimated from an average of the rotation speeds of the rotating shaft measured by the rotation speed meters.

In this manner, the rotation speed meters are provided and the estimated speed of the energy flow is estimated from the average of the rotation speeds of the rotation shaft measured by the rotation speed meters to calculate the ideal torque in accordance with the speed of the energy flow. As a result, it is possible to improve the accuracy of calculation of the ideal torque and also to remove the noise due to the rotation speed meters themselves, external factors or the like

The power generating apparatus of renewable energy type may also include a flow speed meter which measures a speed of energy flow of the renewable energy source and an ideal torque determination unit which determines the ideal torque of the rotating shaft in accordance with the measured speed of the energy flow.

In this manner, the ideal torque is determined in accordance with the measured speed of the energy flow measured by the flow speed meter. Thus, it is possible to improve the power generation efficiency of the power generating apparatus of renewable energy type. Further, the speed of the energy flow can be obtained with high accuracy by directly measuring the speed by the flow speed meter. Thus, it is possible to control the hydraulic pump appropriately.

In the power generating apparatus of renewable energy type, preferably a plurality of the flow speed meters are provided and the ideal torque determination unit determines the ideal torque of the rotating shaft in accordance with an average of the speeds of the energy flow measured by the flow speed meters.

In this manner, the flow speed meters are provided and the ideal torque of the rotating shaft is determined in accordance with the average of the speeds of the energy flow measured by the flow speed meters. It is now possible to improve the accuracy of determining the ideal torque and also to remove the noise due to the rotation speed meters themselves, external factors or the like.

The power generating apparatus of renewable energy type may also include a target torque correction unit which corrects the target torque determined by the target torque determination unit in accordance with a difference obtained by subtracting the determined target torque from an estimated value of an input torque to the rotating shaft from energy flow of the renewable energy source. The estimated value of the input torque is derived from a sum of an acceleration torque of the rotating shaft and a current value of the target torque.

In this manner, the target torque determined by the target torque determination unit is corrected by the target torque correction unit based on the difference obtained by subtracting the determined target torque from the estimated value of the input torque to the rotating shaft from the energy flow of the renewable energy source. Therefore, it is possible to obtain such a target torque during acceleration and deceleration of the rotating shaft, that can shorten the time that takes to achieve the desired rotation speed of the rotating shaft. As a result, it is possible to rapidly control the hydraulic pump in response to the changes of the renewable energy.

In the power generating apparatus of renewable energy type, preferably the target torque correction unit corrects the target torque determined by the target torque determination unit by subtracting a correction value $T_{feedforward}$ derived by multiplying the difference by a gain G from the target torque determined by the target torque determination unit.

As described above, the target torque correction unit obtains the correction value $T_{feedforward}$ derived by multiplying the difference by the gain G. The target torque can be corrected to more appropriate value by setting the gain G to an appropriate value. Specifically, the correction amount of the target torque is adjusted by the gain G so as to adjust the tracking of the changes of the renewable energy.

In the power generating apparatus of renewable energy type, preferably the target torque determination unit determines the target torque of the hydraulic pump by multiplying the ideal torque of the rotating shaft by a scale factor M.

In this manner, the target torque of the hydraulic pump is determined by the target torque determination unit by multiplying the ideal torque of the rotating shaft by the scale factor M. Thus, it is possible to track the changes in the speed of the energy flow by adjusting the scale factor M appropriately.

The power generating apparatus of renewable energy type may also include an ambient temperature sensor which measures ambient temperature of the power generating apparatus. Preferably, the ideal torque of the rotation shaft is corrected based on the measured ambient temperature.

Normally, energy density of the renewable energy source fluctuates with temperature in the power generating apparatus of renewable energy type. Therefore, it is now possible to further enhance the accuracy by measuring the ambient temperature of the power generating apparatus and correcting the ideal torque based on the measured ambient temperature.

In the power generating apparatus of renewable energy type, preferably the pump demand determination unit determines the displacement demand $D_p$ of the hydraulic pump by dividing the target torque of the hydraulic pump by the oil pressure in the high pressure oil line.

The torque to the rotating shaft from the hydraulic pump is obtained from the product of the displacement of the hydraulic pump and the oil pressure in the high pressure oil line. Thus, the displacement of the hydraulic pump to obtain the target torque can be easily obtained by dividing the target torque by the oil pressure in the high pressure oil line. In this manner, the displacement demand $D_p$ of the hydraulic pump is obtained to adjust the actual torque of the rotating shaft more closely to the target torque.

The power generating apparatus of renewable energy type may also include a pump demand correction unit which corrects the displacement demand $D_p$ of the hydraulic pump so that the oil pressure in the high pressure oil line falls within a prescribed range.

In this manner, the oil pressure in the high pressure oil line is maintained in the prescribed range by the pump demand correction unit. It is now possible to correct the displacement demand $D_p$ of the hydraulic pump to ensure a stable operation.

The power generating apparatus of renewable energy type may also include an oil temperature sensor which measures an oil temperature in the high pressure oil line, and a pump demand correction unit which corrects the displacement demand $D_p$ of the hydraulic pump based on the measured oil temperature in the high pressure oil line.

In this manner, the displacement demand $D_p$ of the hydraulic pump is corrected by the pump demand correction unit based on the oil temperature in the high pressure oil line measured by the oil temperature sensor. Thus, it is now possible to control the hydraulic pump as desired in consideration of thermal expansion of the oil.

In the power generating apparatus of renewable energy type, preferably the power generating apparatus is a wind turbine generator which generates power from wind as the renewable energy source.

Although the wind power energy fluctuates substantially in the wind turbine generator, it is possible to rapidly obtain the desired torque of the rotating shaft in response to fluctuations of the wind power energy by adopting the power generating apparatus of renewable energy type.

The present invention also provides a method of operating a power generating apparatus of renewable energy type which includes: a rotating shaft driven by the renewable energy source; a hydraulic pump of variable displacement type driven by the rotating shaft; a hydraulic motor which is driven by pressurized oil supplied from the hydraulic pump; a generator coupled to the hydraulic motor; a high pressure oil line through which a discharge side of the hydraulic pump is in fluid communication with an intake side of the hydraulic motor; and a low pressure oil line through which an intake side of the hydraulic pump is in fluid communication with a discharge side of the hydraulic motor. The method in relation to the present invention may include, but is not limited to, the steps of: determining a displacement demand $D_p$ of the hydraulic pump based on a target torque of the hydraulic pump and an oil pressure in the high pressure oil line; and adjusting displacement of the hydraulic pump to the displacement demand $D_p$.

In the method of operating the power generating apparatus of renewable energy type, the displacement demand $D_p$ of the hydraulic pump is determined based on the target torque of the hydraulic pump and the oil pressure in the high pressure oil line, and the displacement of the hydraulic pump is adjusted to the displacement demand $D_p$. Therefore, it is possible to obtain a desired torque that is optimal torque at which the energy is extracted efficiently from the renewable energy source. In particular, it is possible to adjust the torque rapidly to follow the fluctuations of the renewable energy by changing the target torque of the hydraulic pump in response to the fluctuations of the renewable energy.

**Advantageous Effects of Invention**

According to the present invention, the displacement demand $D_p$ of the hydraulic pump is determined based on the target torque of the hydraulic pump and the oil pressure in the high pressure oil line, and the displacement of the hydraulic pump is adjusted to the displacement demand $D_p$. Therefore, it is possible to obtain a desired torque that is optimal torque at which the energy is extracted efficiently from the renewable energy source. In particular, it is possible to adjust the torque rapidly to follow the fluctuations of the renewable energy by changing the target torque of the hydraulic pump in response to the fluctuations of the renewable energy.

## Brief Description of Drawings

[fig.1]Fig. 1 is a schematic view of an example structure of a wind turbine generator.
[fig.2]Fig. 2 is a schematic view of a structure of a hydraulic transmission and a generator of a wind turbine generator.
[fig.3]Fig. 3 is a graph showing Cp maximum curve stored in a memory unit of a control unit
[fig.4]Fig. 4 is a graph showing Cp maximum curve stored in a memory unit of a control unit.
[fig.5]Fig. 5 is a flow chart showing a process of controlling of a hydraulic pump by the control unit.
[fig.6]Fig. 6 is a schematic of a signal flow of the control unit.
[fig.7]Fig. 7 is an illustration of a detailed structure of the hydraulic pump.
[fig.8]Fig. 8 is an illustration of a detailed structure of the hydraulic motor.

## Description of Embodiments

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

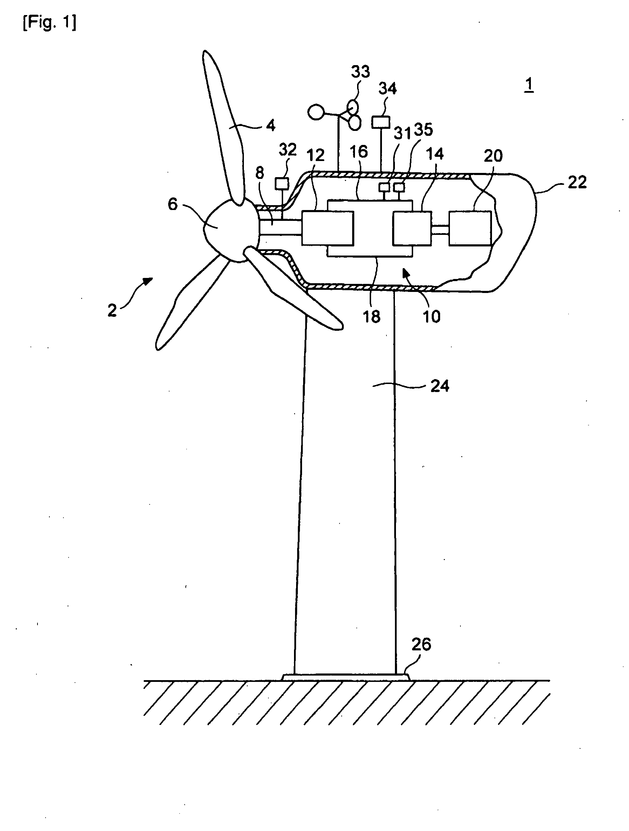

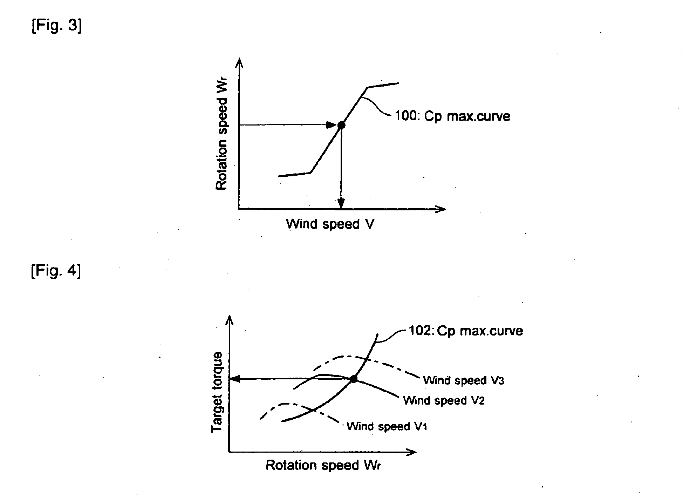

Fig. 1 is an illustration of an example structure of a wind turbine generator. Fig. 3 is an illustration of a structure of a pitch driving mechanism.

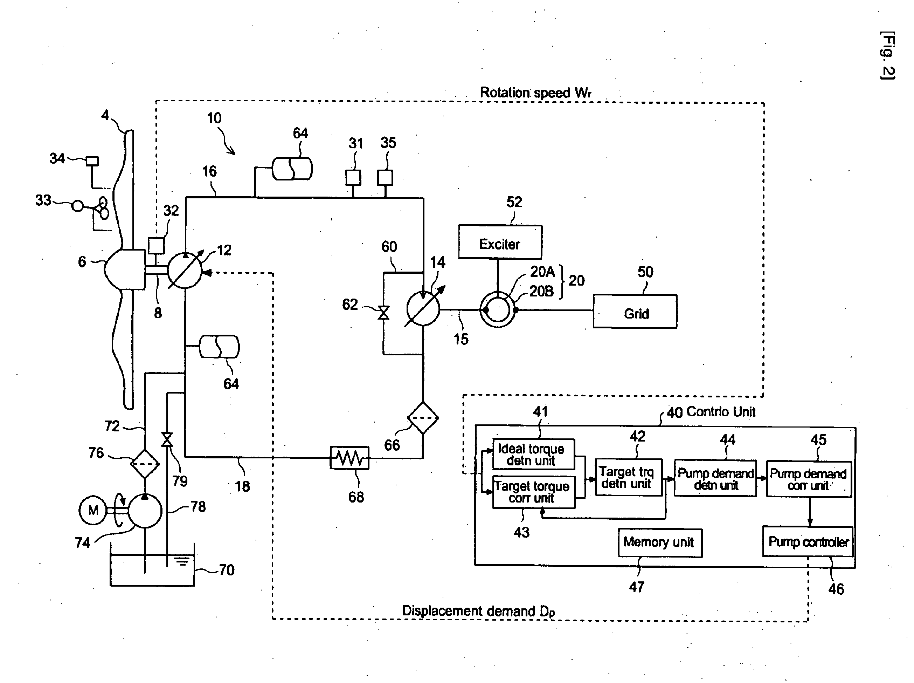

As illustrated in Fig. 1, a wind turbine generator 1 includes a rotor 2 rotated by the wind, a hydraulic transmission 10 for increasing rotation speed of the rotor 2, a generator 20 for generating electric power, a nacelle 22, a tower 24 for supporting the nacelle 22, a control unit 40 (shown in FIG. 2) for controlling the hydraulic transmission 10 of the wind turbine generator 1 and a variety of sensors including a pressure meter 31 and a rotation speed meter 32.

The rotor 2 is constructed such that a rotating shaft 8 is connected to a hub 6 having blades 4. Specifically, three blades 4 extend radially from the hub 6 and each of the blades 4 is mounted on the hub 6 connected to the rotating shaft 8. By this, the power of the wind acting on the blades 4 rotates the entire rotor 2, the rotation of the rotor 2 is inputted to the hydraulic transmission 10 via the rotating shaft 8. By this, the force of the wind acting on the blade rotates the entire rotor 2 and the rotation of the rotor is inputted to the hydraulic transmission 10 via the rotating shaft 8.

As illustrated in Fig. 2, the hydraulic transmission 10 includes a hydraulic pump 12 of a variable displacement type which is rotated by the rotating shaft 8, a hydraulic motor 14 of a variable displacement type which is connected to the generator 20, and a high pressure oil line 16 and a low pressure oil line 18 which are arranged between the hydraulic pump 12 and the hydraulic motor 14.

The high pressure oil line 16 connects a discharge side of the hydraulic pump 12 to an intake side of the hydraulic motor 14. The low pressure oil line 18 connects an intake side of the hydraulic pump 12 to a discharge side of the hydraulic motor 14. The operating oil (low pressure oil) discharged from the hydraulic pump flows info the hydraulic motor via the high pressure oil line. The operating oil having worked in the hydraulic motor 14 flows into the hydraulic pump 12 via the low pressure oil line 18 and then the pressure thereof is raised by the hydraulic pump 12 and finally the operating oil flows into the hydraulic motor 14 so as to drive the hydraulic motor 14.

Fig. 2 illustrates an exemplary embodiment in which the hydraulic transmission 10 includes only one hydraulic motor 14. However, it is also possible to provide a plurality of hydraulic motors 14 and connect each of the hydraulic motors 14 to the hydraulic pump 12.

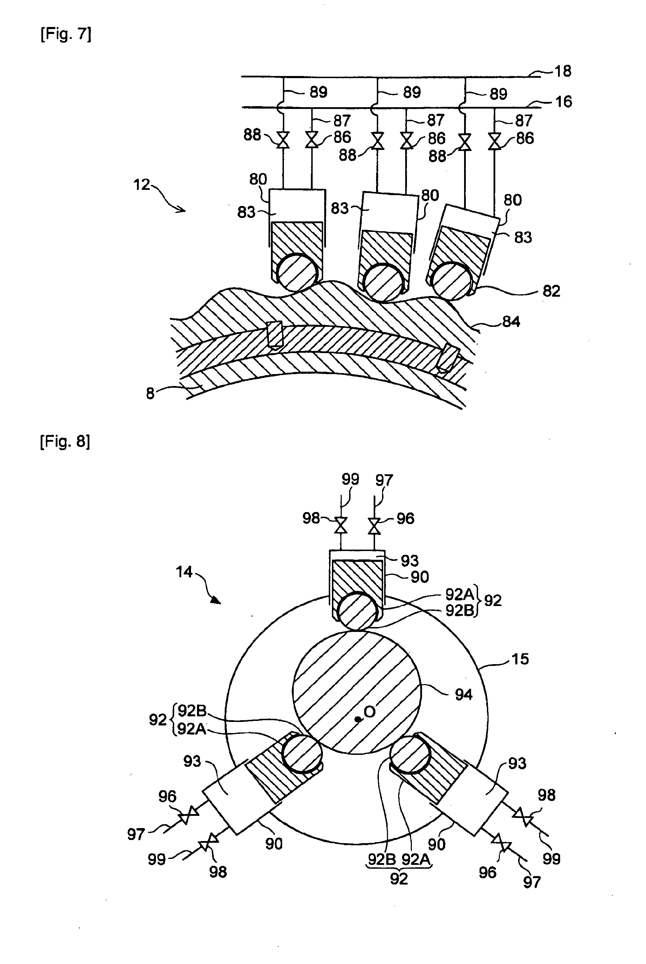

The detailed structure of the hydraulic pump and the hydraulic motor is described here as an example. FIG. 7 is a detailed structure of the hydraulic pump and FIG. 8 is a detailed structure of the hydraulic motor.

As shown in Fig. 7, The hydraulic pump 12 includes a plurality of oil chambers 83 each of which is formed by a cylinder 80 and a piston 82, a cam 84 having a cam profile which is in engagement with the piston 82 and a high pressure valve 86 and a low pressure valve 88 which are provided for each of the oil chambers 83.

The high pressure valve 86 is arranged in a high pressure communication path 87 between the high pressure oil line 16 and each of the oil chambers 83 and the low pressure valve 88 is arranged in a low pressure communication path 89 between the low pressure oil line 18 and each of the oil chambers 83.

In the hydraulic pump 12, the cam 84 rotates with the rotating shaft 8 and the pistons 82 is periodically moved upward and downward in accordance with a cam curve to repeat a pump cycle of the pistons 82 starting from the bottom dead center and reaching the top dead center and a intake cycle of the pistons starting from the top dead center and reaching the bottom dead center.

As illustrated in Fig. 8, the hydraulic motor 14 includes a plurality of hydraulic chambers 93 formed between cylinders 90 and pistons 92, a cam 94 having a cam profile which engages with the pistons 92, and a high pressure valve 96 and a low pressure valve 98 that are provided for each of the hydraulic chambers 93.

The high pressure valve 96 is arranged in a high pressure communication path 97 between the high pressure oil line 16 and each of the oil chambers 93. Meanwhile, the low pressure valve 98 is a poppet solenoid valve of normally open type that is arranged in a low pressure communication path 99 between the low pressure oil line 18 and each of the oil chambers 93. The low pressure valve 98 could be a normally closed type.

In the hydraulic motor 14 as shown with a piston cycle curve 130, the pistons 92 is periodically moved upward and downward to repeat a motor cycle of the pistons 92 starting from the top dead center and reaching the bottom dead center and a discharge cycle of the pistons starting from the bottom dead center and reaching the top dead center.

The hydraulic pump and the hydraulic motor are piston-type as described above. However, this is not limitative and the hydraulic pump and the hydraulic motor may be any type of hydraulic mechanisms of variable displacement type such as vane-type.

As illustrated in FIG. 2, a rotation speed meter 32 for measuring the rotation speed of the rotating shaft 8 and a pressure meter 31 for measuring the pressure in the high pressure oil line 16 are provided as the variety of sensors. Furthermore, it is possible to provide, as the variety of sensors, an anemometer 33 which is installed outside the nacelle 22 and measures the wind speed, a temperature sensor 34 for measuring ambient temperature of the wind turbine generator 1 and an oil temperature sensor 35 which measures an oil temperature in the high pressure oil line 16. The measurement results of such sensors are sent to the control unit 40 to control the hydraulic pump 12. The example in which one set of each of the sensors is provided is illustrated in the drawing. However, this is not limitative and it is possible to provide more than one set of each of the sensors.

Furthermore, an anti-pulsation accumulator 64 is provided for the high pressure oil line 16 and the low pressure oil line 18. By this, the pressure fluctuation (pulsation) of the high pressure oil line 16 and the low pressure oil line 18 is suppressed. Moreover, an oil filter 66 for removing impurities from the operating oil and an oil cooler 68 for cooling the operating oil are arranged in the low pressure oil line.

A bypass oil line 60 is arranged between the high pressure oil line 16 and the low pressure oil line 18 to bypass the hydraulic motor 14 and a relief valve 62 is arranged in the bypass oil line 60 to maintain hydraulic pressure of the high pressure oil line 16 not more than a set pressure. By this, the relief valve 62 automatically opens when the pressure in the high pressure oil line 16 reaches the set pressure of the relief valve 62, and the high pressure oil is allowed to escape to the low pressure oil line 18 via the bypass line 60.

Further, the hydraulic transmission 10 has an oil tank 70, a supplementary line 72, a boost pump 74, an oil filter 76, a return line 78 and a low pressure relief valve 79.

In some embodiments all or part of the return flow from the hydraulic motor 14 passes through one or more of these units.

The oil tank 70 stores supplementary operating oil. The supplementary line 72 connects the oil tank 70 and the low pressure oil line 18. The boost pump 74 is arranged in the supplementary line 72 so as to replenish the low pressure oil line 18 with the supplementary operating oil from the oil tank 70. In such a case, the oil filter 76 arranged in the supplementary line 72 removes impurities from the operating oil to be supplied to the low pressure oil line 18.

Even when the operating oil leaks in the hydraulic transmission 10, the boost pump 74 replenishes the low pressure oil line with the operating oil from the oil tank 70 and thus, the amount of the operating oil circulating in the hydraulic transmission 10 can be maintained.

The return line 78 is installed between the oil tank 70 and the low pressure oil line 18. The low pressure relief valve 79 is arranged in the return line 78 and the pressure in the low pressure oil line 18 is maintained near the prescribed pressure.

This enables the low pressure relief valve 79 to open automatically to release the operation oil to the oil tank 70 via the return line 88 once the pressure in the low pressure oil line 18 reaches the prescribed pressure of the low pressure relief valve 79, although the boost pump 74 supplies the operating oil to the low pressure oil line 18. Thus, the amount of the operating oil circulating in the hydraulic transmission 10 can be adequately maintained.

The generator 20 is synchronized with the grid 50 such that the electric power generated by the generator 20 is supplied to the grid 50. As Fig. 2 shows, the generator 20 includes an electromagnetic synchronous generator which is constituted of a rotor 20A connected to the output shaft 15 of the hydraulic motor 14 and another rotor 20B connected to the grid 50. An exciter 52 is connected to the rotor 20A of the generator 20 so that the power factor of the electric power generated in the rotor 20B of the generator 20 can be regulated by changing a field current flowing in the rotor 20A. By this, it is possible to supply to the grid 50 the electric power of good quality which is adjusted to the desired power factor.

The nacelle 22 shown in Fig. 1 supports the hub 6 of the rotor 2 rotatably and houses a variety of devices such as the hydraulic transmission 10 and the generator 20. Further, the nacelle 22 may be rotatably supported on the tower 24 and be turned by a yaw motor (not shown) in accordance with the wind direction.

The tower 24 is formed into a column shape extending upward from a base 26. For instance, the tower 22 can be constituted of one column member or a plurality of units that are connected in a vertical direction to form a column shape. If the tower 24 is constituted of the plurality of units, the nacelle 22 is mounted on the top-most unit.

The structure of the control unit 40 is explained in reference to FIG. 2. The control unit 40 may construct a distributed control system configured such that the control unit 40 and a variety of control devices 41 to 47 may be arranged in different locations, inside or outside of the nacelle. It is possible to incorporate into a processing unit, at least one of functions of the control unit 40 and the control devices 41 to 47 constituting the control unit 40.

The control unit 40 includes an ideal torque determination unit 41, a target torque correction unit 43, a target torque determination unit 42, a pump demand determination unit, a pump controller 46 and a memory unit 47.

The target torque determination unit 42 determines the target torque of the hydraulic pump based on an ideal torque of the rotating shaft at which a power coefficient Cp becomes maximum. In addition to this, preferably the target torque determination unit 42 multiplies the ideal torque of the rotating shaft 8 by a scale factor M to determine the target torque of the hydraulic pump 12.

The ideal torque determination unit 41 determines the ideal torque of the rotating shaft 8 in accordance with the measured rotation speed of the rotating shaft 8. The ideal torque is torque at which wind power energy can be converted efficiently into rotation energy of the rotating shaft 8, i.e. torque with high extraction efficiency from the wind power energy.

An example structure of the ideal torque determination unit 41 is described below in details.

The ideal torque determination unit 41 determines the ideal torque at which the power coefficient $C_p$ becomes maximum based on the measured rotation speed of the rotating shaft 8 measured by the rotation speed meter 32. It is also possible to determine the ideal torque of the rotating shaft 8 in accordance with an average of the rotation speeds of the rotating shaft 8 measured by the rotation speed meters 32.

Alternatively, the ideal torque determination unit 41 may determine the ideal torque of the rotating shaft 18 based on the estimated wind speed estimated from the measured rotation speed of the rotating shaft 8 measured by the rotation speed meter 32. It is also possible to determine the ideal torque of the rotating shaft 8 in accordance with the estimated wind speed estimated from the average of the measured rotation speeds of the rotating shaft 8 measured by the rotation speed meters 32. It is also possible to obtain the wind speed directly by means of the anemometer 33. When more than one anemometer 33 is provided, the average of the wind speeds may be used.

The ideal torque determination unit 41 may correct the ideal torque of the rotating shaft 8 based on the measured ambient temperature of the wind turbine generator 1 measured by the ambient temperature sensor 34. The ambient temperature of the wind turbine generator 1 is one of the factors that influence the torque of the rotating shaft 8. Technically, the wind power energy is determined from a wind flow rate (mass flow rate) and the wind speed. With changing of the ambient temperature of the wind turbine generator 1, air density changes. This changes the mass of the air. Therefore, the ideal torque is corrected based on the ambient temperature of the wind turbine generator 1 so as to enhance accuracy of the ideal torque.

The target torque correction unit 43 corrects the target torque determined by the target torque determination unit 42. Specifically, the determined target torque determined by the target torque determination unit 42 is corrected in accordance with a difference obtained by subtracting the determined target torque determined by the target torque determination unit 42 from an estimated value of an aerodynamic torque. The estimated value of the input torque is derived from a sum of an acceleration torque of the rotating shaft 8 and a current value of the target torque. The aerodynamic torque is an input torque to the rotating shaft 8 from energy flow of the renewable energy source.

The target torque correction unit 43 may determines the aerodynamic torque based on the ambient temperature of the wind turbine generator 1 measured by the ambient temperature sensor 34. The acceleration torque of the rotating shaft 8 as well as the ambient temperature of the wind turbine generator 1 is one of the factors that influence the torque of the rotating shaft 8. With changing of the ambient temperature, the air density changes, resulting in changing the mass of the air. This influences the torque of the rotating shaft 8.

In addition to the above structure of the target torque correction unit 43, the target torque correction unit 43 corrects the target torque determined by the target torque determination unit 42 by subtracting a correction value $T_{feedforward}$ derived by multiplying the difference between the aerodynamic torque and the target torque by a gain G from the target torque determined by the target torque determination unit 42.

The pump demand determination unit 44 determines a displacement demand $D_p$ of the hydraulic pump 12 based on a target torque of the hydraulic pump 12 and an oil pressure in the high pressure oil line 16.

The pump demand correction unit 45 corrects the displacement demand $D_p$ of the hydraulic pump 12 so that the oil pressure in the high pressure oil line 16 falls within a prescribed range.

Alternatively, the pump demand correction unit 45 corrects the displacement demand $D_p$ of the hydraulic pump 12 based on the measured oil temperature in the high pressure oil line 16 measured by the oil temperature sensor 35.

The pump controller 36 controls the hydraulic pump 12, in particular herein, adjusts the displacement of the hydraulic pump 12 to the determined displacement demand $D_p$.

It is possible to provide a motor controller (not shown) in addition to the control units described above. The motor controller determines the displacement demand $D_m$ of the hydraulic motor 14 to keep the rotation speed of the generator constant based on the discharge amount $Q_p$ of the hydraulic pump 12 obtained from the displacement $D_p$ of the hydraulic pump 12.

The controlling of the hydraulic pump 12 and the hydraulic motor 14 is described later.

The memory unit 47 stores a Cp maximum curve and a target pressure setting curve to be used for the control of the wind turbine generator 1.

Fig. 3 and Fig. 4 are graphs showing Cp maximum curves stored in the memory unit 37. The Cp maximum curves are formed by connecting the points at which the power coefficient Cp becomes maximum. Fig. 3 shows a Cp maximum curve 100 with the wind speed V on the x-axis and the rotation speed $W_r$ of the rotating shaft 8 on the y-axis. Fig. 4 shows a Cp maximum curve 102 with the rotation speed $W_r$ of the rotating shaft 8 on the x-axis and the target torque of the hydraulic pump 12 on the y-axis.

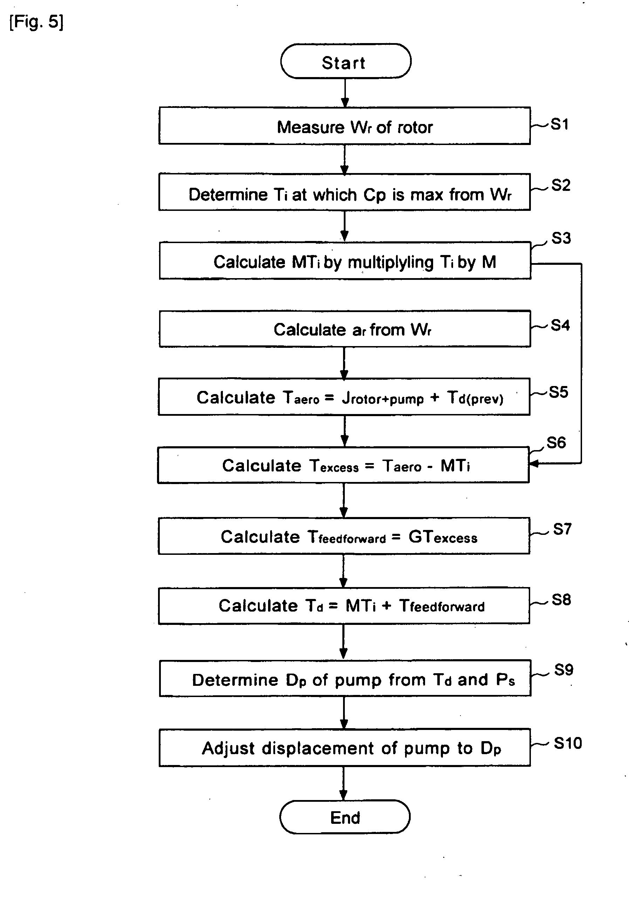

The algorithm relating to the operation of the control unit 40 is described in reference to the flow chart of Fig. 5.

First, the rotation speed meter 38 measures the rotation speed $W_r$ of the rotating shaft 8 (Step S1). The ideal torque determination unit 41 determines the ideal torque Ti at which the power coefficient Cp becomes maximum in accordance with the measured rotation speed $W_r$ (Step S2). Specifically, on the condition that such operation state is maintained that power coefficient Cp is maximum, the Cp maximum curve 100 (ref. Fig. 3) is retrieved from the memory unit 47 and the wind speed V corresponding to the measured rotation speed $W_r$ is obtained based on the Cp maximum curve 100 (see Fig. 3). The ideal torque determination unit 41 retrieves the Cp maximum curve 102 (see Fig. 4) from the memory unit 47 and obtains an ideal torque $T_j$ of the hydraulic pump 12 corresponding to the wind speed V estimated as described above. Fig. 4 illustrates the example in which the ideal torque $T_j$ of the hydraulic pump 12 is obtained in such a case that the estimated wind speed V is $V_2$.

The target torque determination unit 42 determines an adjusted ideal torque $MT_i$ by multiplying the ideal torque $T_i$ determined by the ideal torque determination unit 41 by the scale factor M (Step S3). The scale factor M is typically between 0.9 and 1.0 and may vary during use, according to wind conditions and aerodynamic changes of the blade 4 over time. It is a precondition that the torque applied to the rotating shaft 8, in the case of M<1, has a value slightly smaller than the ideal torque. The rotation speed of the rotating shaft 8 increases slightly for the corresponding amount in comparison to the case of the ideal torque. Therefore, it is possible to adjust the rotation speed of the rotating shaft 8 in response to rapid changes of the wind speed. It is a precondition that the gust is not more than the upper limit of the permissible wind speed range of the wind turbine generator 1. The permissible wind speed range is a range of the wind speed where the rotor 2 can normally operate without causing it to over-rotate, and is usually set higher than the upper limit of the rated wind speed range.

With the structure described above, the ideal torque is slightly off the optimal torque in lulls. However, the rotation energy converted from the wind power energy in gusts is much higher than in lulls. Thus, the available power is very much higher as the wind turbine generator overall. It is very beneficial to adopt the above structure.

The target torque correction unit 43 determines an angular acceleration a, of the rotating shaft 8 from the rate of change of the rotation speed $W_r$ of the rotating shaft 8 (Step S4).

Further, the target torque correction unit 43 determines the aerodynamic torque $T_{aero}$ (Step S5). The aerodynamic torque $T_{aero}$ is the actual amount of torque applied to the rotating shaft 8 by the wind at the present time. The aerodynamic torque $T_{aero}$ is the sum of the torque applied to the rotating shaft 8 from the hydraulic pump 12 by a previous target torque $T_d(prev)$ and a net acceleration torque that is the product of the inertia moment $J_{rotor+pump}$ of the rotor 2 (including the rotating shaft 8) and the hydraulic pump 12 and the angular acceleration $a_r$ of the rotating shaft 8. The previous target torque $T_d$ (prev) may be obtained from the selected net displacement rate of the hydraulic pump 12 and the measured pressure in the high pressure line.

Then, the target correction unit 43 obtains an excess torque $T_{excess}$ from a difference between the aerodynamic torque obtained in the step S5 and the ideal torque adjusted in the step S3 (Step S6). The excess torque $T_{excess}$ is expected to accelerate (if positive) or decelerate (if negative).

Further, the torque correction unit 43 calculates a corrected torque Tfeedforward by multiplying $T_{excess}$ by multiplying the excess torque $T_{excess}$ by the gain G (Step S7). A more complex feedforward function may be used, for instance a lead or lag controller to improve tracking of wind speed even further.

Next, the target torque calculation unit 42 calculates the target torque $T_d$ by multiplying the adjusted ideal torque $MT_i$ and the corrected torque $T_{feedforwad}$ (Step S8).

Then, the pump demand determination unit 44 determines a desired displacement $D_p$ of the hydraulic pump according to Formula 1 from the target torque $T_d$ and the oil pressure Ps(Pressure of high-pressure oil) in the high pressure line (Step S9).

(Formula 1)

Displacement demand $D_p$ = Target torque $T_d$ / Pressure of high-pressure oil $P_s$

Then, the pump controller 46 adjusts the desired displacement $D_p$ of the hydraulic pump 12 (Step S10).

It is now described how the pump controller 46 controls the hydraulic pump 12 as illustrated in Fig. 7.

The pump controller 32 changes the number of disabled oil chambers so as to achieve the desired displacement demand $D_p$ of the hydraulic pump 12, the disabled oil chambers being kept such that during a cycle of the piston 82 of the hydraulic pump 12 starting from a bottom dead center, reaching a top dead center and returning to the bottom dead center, the high pressure valve 86 of the hydraulic pump 12 is closed and the low pressure valve 88 of the hydraulic pump 12 remains open. Specifically, the pump controller 32 sets the number of disabled chambers from the displacement demand $D_p$ of the hydraulic pump 12, according to which the hydraulic pump 12 is controlled.

Further, it is also possible during controlling by the pump controller 32 to change the displacements of the hydraulic pump 12 and the hydraulic motor 14 by changing the timing of opening the high pressure valve (86, 96) during the piston cycle.

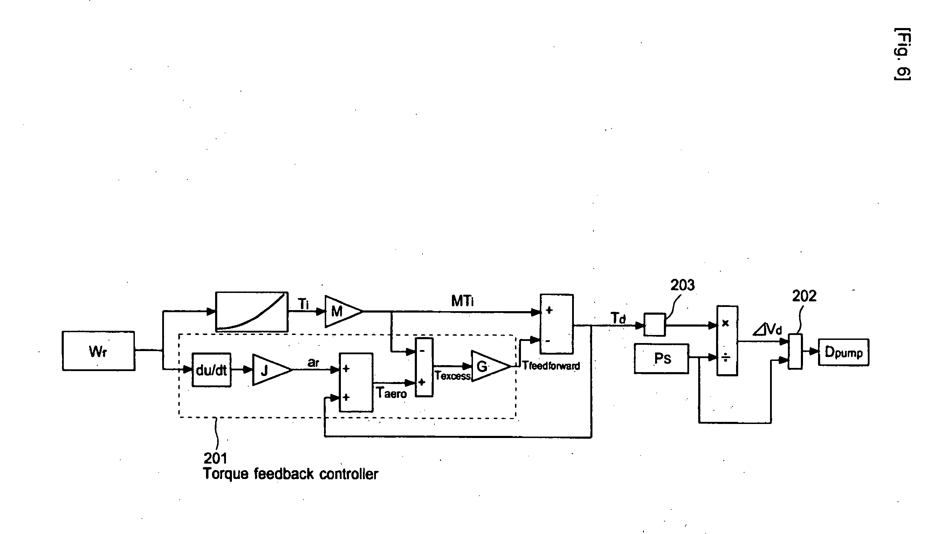

The signal flow of the control unit 40 is explained in reference to Fig. 6. Fig. 6 is corresponds to the algorithm flow chart of Fig. 5.

First, the ideal torque Ti is determined from the rotation speed $W_r$ of the rotating shaft 8 measured by the rotation speed meter 32. In such process, the ideal torque Ti at which the power coefficient Cp is maximum is determined from a function 102 of Fig. 4 with the target torque (the ideal torque Ti) and the rotation speed $W_r$.

The ideal torque is adjusted by multiplying by an ideal torque scale factor M to give an adjusted ideal torque $MT_i$. The ideal torque scale factor M can be any number between zero and one, and would typically be between 0.9 and 1. A slight reduction of the adjusted ideal torque $MT_i$ from the ideal torque Ti increases the rotation speed and allows the rotating shaft 8 to accelerate more rapidly during gusts, thus capturing more power than if the pump torque are not scaled from the ideal function by the scale factor M.

The scale factor M will cause the rotor to decelerate more slowly, thus operating off its optimum operating point during lulls. However, the additional power gained from tracking the gusts, is greater than the power loss during a sub-optimum operation during the lulls.

The target torque $T_d$ is the difference between the adjusted ideal torque and the output of a torque feedback controller 201. The torque feedback controller 201 is included in the target torque correction unit 43. The torque feedback controller 201 calculates an estimated aerodynamic torque $T_{aero}$ from the sum of the current torque target and an acceleration torque. The acceleration torque is derived from the angular acceleration of the rotating shaft 8 multiplied by the moment of rotational inertia of the rotor 2, J. The output of the torque feedback controller 201 is the difference $T_{excess}$ between the estimated aerodynamic torque and the adjusted ideal torque, which is then multiplied by a feedback gain, G to obtain a feedback torque $T_{feedback}$. The feedback gain, G can be any number greater than or equal to zero, with a value of zero acting to disable the torque feedback controller 201.

The torque feedback controller 201 responds to the acceleration and deceleration of the energy extraction by subtracting the corrected torque from the adjusted ideal torque. Specifically, in the case of acceleration, the target torque is slightly reduced, whereas in the case of deceleration, the target torque is slightly increased by adding the correction torque to the adjusted ideal torque. This enables the rotating shaft 8 to accelerate and decelerate faster in response to changes in input energy than the adjusted ideal torque along, hence allowing for greater total energy capture from the wind.

Next, the displacement demand $D_p$ of the hydraulic pump 12 is calculated by dividing the target torque Td by the measured oil pressure in the high pressure oil line 16. The displacement demand $D_p$ may be modified by a pressure limiter 202. The pressure limiter 202 may be a PID type controller, the output of which is the pump demand output of the controller, $D_p$. The pressure limiter 202 is included in the pump demand correction unit 45. The pressure limiter 202 acts to keep the pressure of the hydraulic pump 12 within the acceptable range, i.e. below a maximum level for safe operation of the wind turbine generator, by modifying the pump demanded rate of fluid quanta transfer. The pressure limit may be disabled in some operating modes where it is desirable to dissipate energy through the relief valve 62, for instance to prevent the wind turbine generator from operating above its rated speed during extreme gusts, or may be varied in use. The pump demand correction unit 45 may correct the displacement demand $D_p$ of the hydraulic pump 12 based on the oil temperature in the high pressure oil line 16 measured by the oil temperature sensor 35.

When determining the displacement demand $D_p$ of the hydraulic pump 12, an adjuster 203 may be provided to adjust the target torque Td based on power demand signal. The power demand signal is, for instance, inputted from a wind farm control unit of a wind farm to which the wind turbine generator belongs. In this manner, the target torque $T_d$ is corrected based on the power demand signal to obtain the power generation as desired.

In the above preferred embodiments, the pump demand determination unit 44 determines the displacement demand $D_p$ of the hydraulic pump 12 based on the target torque $T_d$ of the hydraulic pump 12 and the oil pressure Ps in the high pressure oil line 16, and the pump controller 46 adjusts the displacement of the hydraulic pump 12 to the determined displacement demand $D_p$. Thus, it is possible to obtain desired torque, i.e. optimal torque which is optimum for efficient energy extraction from the renewable energy source. In particular, the target torque $T_d$ of the hydraulic pump 12 is varied in response to the fluctuation of renewable energy so as to regulate the torque rapidly to follow fluctuations of the renewable energy.

The ideal torque determination unit 41 determines the ideal torque of the rotating shaft 8 in accordance with the measured rotation speed of the rotating shaft 8 measured by the rotation speed meter 32 so as to improve the power generation efficiency of the wind turbine generator 1. The rotation speed of the rotating shaft 8 is measurable with high accuracy by the rotation speed meter 32. The ideal torque is determined based on the actual rotation speed of the rotating shaft 8 measured by the rotation speed meter 32 to control the hydraulic pump appropriately.

Particularly, in the above preferred embodiments, the ideal torque is obtained from the wind speed estimated from the measured wind speed and thus, it is possible to estimate the wind speed with high accuracy and to perform the control of the hydraulic pump 12 appropriately. The anemometer 33 may not be provided to reduce the cost.

Alternatively, the ideal torque Ti of the rotating shaft 8 or the wind speed may be determined in accordance with the average of the rotation speeds of the rotating shaft 8 measured by the rotation speed meters 32. In such case, it is possible to improve accuracy of calculating the ideal torque and also to remove the noise due to the rotation speed meters themselves, external factors or the like.

Instead of determining the ideal torque by means of the rotation speed meter 32, the ideal torque may be determined based on the wind speed measured by the anemometer 33. This enables the wind turbine generator 1 to improve power generation efficiency.

Further, the wind speed can be obtained with high accuracy by directly measuring the wind speed by the anemometer 33. Thus, it is possible to control the hydraulic pump 12 appropriately.

Furthermore, the ideal torque Ti of the rotating shaft 8 may be determined based on the average of the wind speeds measured by the anemometer 33. This improves the accuracy of determining the ideal torque and also removes the noise due to the rotation speed meters themselves, external factors or the like.

The target torque correction unit 43 corrects the target torque determined by the target torque determination unit in accordance with a difference obtained by subtracting the determined target torque from an estimated value of an input torque to the rotating shaft 8 from energy flow of the renewable energy source. Therefore, it is possible to obtain such target torque during acceleration and deceleration of the rotating shaft 8, that can shorten the time that takes to achieve the desired rotation speed of the rotating shaft 8. As a result, the hydraulic pump 12 can be controlled rapidly in response to the changes of the renewable energy.

The pump demand determination unit 44 determines the displacement demand $D_p$ of the hydraulic pump 12 by dividing the target torque of the hydraulic pump 12 by the oil pressure in the high pressure oil line 16. Therefore, it is possible to adjust the actual torque of the rotating shaft 8 much closer to the target torque.

Further, the pump demand correction unit 45 corrects the displacement demand $D_p$ of the hydraulic pump 12 so that the oil pressure in the high pressure oil line 16 falls within a prescribed range. Therefore, it is possible to correct the displacement demand $D_p$ of the hydraulic pump 12 to ensure the safe operation of the wind turbine generator.

Furthermore, the pump demand correction unit 45 corrects the displacement demand $D_p$ of the hydraulic pump 12 based on the measured oil temperature in the high pressure oil line 16 measured by the oil temperature sensor 35. Therefore, it is possible to control the hydraulic pump 12 appropriately in consideration of thermal expansion of the oil.

While the present invention has been described with reference to exemplary embodiments, it is obvious to those skilled in the art that various changes may be made without departing from the scope of the invention.

For instance, the above preferred embodiment uses the exemplary case in which the present invention is applied to the wind turbine generator. But the present invention is also applicable to a tidal current generator. A "tidal current generator" herein refers to a generator which is installed in places such as sea, a river and a lake and utilizes tidal energy. The tidal current generator has the same basic structure as the wind turbine generator 1 except that the rotor 2 is rotated by the tidal current instead of the wind. The tidal current generator includes the rotor 2 rotated by the tidal current, the hydraulic transmission 10 for increasing the rotation speed of the rotor 2, the generator 20 for generating electric power and the control unit 40 for controlling each unit of the tidal current generator.

Herein, the control unit 40 of the tidal current generator sets the target torque of the hydraulic pump 12 at which the power coefficient becomes maximum, and then sets the displacement $D_p$ of the hydraulic pump based on the target torque and the pressure of operating oil in the high pressure oil line 16 so as to control the hydraulic pump 12. As a result, the desired torque can be obtained and the power generation efficiency is improved.

In the case of using the tidal current generator, the target torque of the hydraulic pump 12 may be obtained based on the speed of the tidal current measured by the speed meter instead of the wind speed measured by the anemometer 33, according to the Cp maximum curve 102 (see Fig. 4).

**Reference Signs List**

Wind turbine generator
Rotor
4 Blade
6 Hub

8 Rotating shaft
10 Hydraulic transmission
12 Hydraulic pump
14 Hydraulic motor
16 High pressure oil line
18 Low pressure oil line
20 Generator
22 Nacelle
24 Tower
26 Base
31 Pressure meter
32 Rotation speed meter
33 Anemometer
34 Ambient temperature sensor
35 Oil temperature sensor
40 Control unit
41 Ideal torque determination unit
42 Target torque determination unit
43 Target torque correction unit
44 Pump demand determination unit
45 Pump demand correction unit
46 Pump controller
47 Memory unit
50 Grid
52 exciter
54 grid state judging unit
60 bypass line
62 relief valve
64 anti-pulsation accumulator
66 oil filter
68 oil cooler
70 oil tank
72 supplementary line
74 boost pump
76 oil filter
78 return line
79 low pressure relief valve
80 cylinder
82 piston
82A piston body
82B piston roller
83 oil chamber
84 cam
86 high pressure valve
87 high pressure communication path
88 low pressure valve
89 low pressure communication path
90 cylinder
92 piston
92A piston body
92B piston roller
93 oil chamber
94 cam
96 high pressure valve
97 high pressure communication path
98 low pressure valve
99 low pressure communication path
100 Cp maximum curve

102 Cp maximum curve
104 target pressure curve
110 piston cycle curve
112 HPV voltage signal
114 high pressure valve position
116 LPV voltage signal
118 low pressure valve position
120 pressure curve
130 piston cycle curve
132 HPV voltage signal
134 high pressure valve position
136 LPV voltage signal
138 low pressure valve position
140 pressure curve

**Claims**

1. A power generating apparatus of renewable energy type which generates power from a renewable energy source, comprising:

   a rotating shaft (8) driven by the renewable energy source;
   a hydraulic pump (12) of variable displacement type driven by the rotating shaft (8);
   a hydraulic motor (14) which is driven by pressurized oil supplied from the hydraulic pump (12);
   a generator (20) coupled to the hydraulic motor (14);
   a high pressure oil line (16) through which a discharge side of the hydraulic pump (12) is in fluid communication with an intake side of the hydraulic motor (14);
   a pump demand determination unit (44) which determines a displacement demand $D_p$ of the hydraulic pump (12) based on a target torque ($T_d$) of the hydraulic pump (12) and an oil pressure in the high pressure oil line (16); and
   a pump controller (46) which adjusts displacement of the hydraulic pump (12) to the determined displacement demand $D_p$;
   a target torque determination unit (42) which determines the target torque ($MT_i$) of the hydraulic pump (12) based on an ideal torque ($T_i$) of the rotating shaft at which a power coefficient ($C_p$) becomes maximum, and
   a target torque correction unit (43) which corrects the target torque ($MT_i$) determined by the target torque determination unit (42) in accordance with a difference obtained by subtracting the determined target torque ($MT_i$) from a sum ($T_{aero}$) of an acceleration and deceleration torque ($a_r \times J_{rotor+pump}$) of the rotating shaft (8) and a previous value ($T_{d(prev)}$) of the target torque.

2. The power generating apparatus of renewable energy type according to claim 1, further comprising:

   a rotation speed meter which measures a rotation speed of the rotating shaft (8); and
   an ideal torque determination unit which determines the ideal torque of the rotating shaft in accordance with the measured rotation speed of the rotating shaft.

3. The power generating apparatus of renewable energy type according to claim 2,
   wherein a plurality of the rotation speed meters are provided, and
   wherein the ideal torque determination unit determines the ideal torque of the rotating shaft in accordance with an average of the rotation speeds of the rotating shaft (8) measured by the rotation speed meters.

4. The power generating apparatus of renewable energy type according to claim 1, further comprising:

   a rotation speed meter which measures a rotation speed of the rotating shaft (8); and
   an ideal torque determination unit which determines the ideal torque of the rotating shaft in accordance with an estimated speed of energy flow of the renewable energy source estimated from the measured rotation speed of the rotating shaft (8).

5. The power generating apparatus of renewable energy type according to claim 4,

wherein a plurality of the rotation speed meters are provided, and
wherein the estimated speed of the energy flow is estimated from an average of the rotation speeds of the rotating shaft (8) measured by the rotation speed meters.

6. The power generating apparatus of renewable energy type according to claim 1, further comprising:

a flow speed meter which measures a speed of energy flow of the renewable energy source; and
an ideal torque determination unit which determines the ideal torque of the rotating shaft (8) in accordance with the measured speed of the energy flow.

7. The power generating apparatus of renewable energy type according to claim 6,
wherein a plurality of the flow speed meters are provided, and
wherein the ideal torque determination unit determines the ideal torque of the rotating shaft (8) in accordance with an average of the speeds of the energy flow measured by the flow speed meters

8. The power generating apparatus of renewable energy type according to claim 1,
wherein the target torque correction unit corrects the target torque determined by the target torque determination unit by subtracting a correction value $T_{feedforward}$ derived by multiplying the difference by a gain G from the target torque determined by the target torque determination unit.

9. The power generating apparatus of renewable energy type according to claim 2,
wherein the target torque determination unit determines the target torque of the hydraulic pump by multiplying the ideal torque of the rotating shaft (8) by a scale factor M, M being any number between 0 and 1.

10. The power generating apparatus of renewable energy type according to claim 1, further comprising:

an ambient temperature sensor which measures ambient temperature of the power generating apparatus,
wherein the ideal torque of the rotating shaft (8) is corrected based on the measured ambient temperature.

11. The power generating apparatus of renewable energy type according to claim 1,
wherein the pump demand determination unit determines the displacement demand $D_p$ of the hydraulic pump by dividing the target torque of the hydraulic pump by the oil pressure in the high pressure oil line.

12. The power generating apparatus of renewable energy type according to claim 1, further comprising:

a pump demand correction unit which corrects the displacement demand $D_p$ of the hydraulic pump (12) so that the oil pressure in the high pressure oil line (16) falls within a prescribed range.

13. The power generating apparatus of renewable energy type according to claim 1, further comprising:

an oil temperature sensor which measures an oil temperature in the high pressure oil line (16); and
a pump demand correction unit which corrects the displacement demand $D_p$ of the hydraulic pump based on the measured oil temperature in the high pressure oil line.

14. The power generating apparatus of renewable energy type according to claim 1, wherein the power generating apparatus is a wind turbine generator which generates power from wind as the renewable energy source.

15. A method of operating a power generating apparatus of renewable energy type which comprises: a rotating shaft (8) driven by the renewable energy source; a hydraulic pump (12) of variable displacement type driven by the rotating shaft; a hydraulic motor (14) which is driven by pressurized oil supplied from the hydraulic pump (12); a generator (20) coupled to the hydraulic motor (14); a high pressure oil line (16) through which a discharge side of the hydraulic pump (12) is in fluid communication with an intake side of the hydraulic motor (14); and a low pressure oil line (18) through which an intake side of the hydraulic pump (12) is in fluid communication with a discharge side of the hydraulic motor (14), the method comprising the steps of:

determining the target torque ($MT_i$) of the hydraulic pump (12) based on an ideal torque ($T_i$) of the rotating shaft (8) at which a power coefficient ($C_p$) becomes maximum,
correcting the target torque ($MT_i$) determined by a target torque determination unit (42) in accordance with a difference obtained by subtracting the determined target torque ($MT_i$) from a sum ($T_{aero}$) of an acceleration and deceleration torque ($a_r$ x $J_{rotor+pump}$) of the rotating shaft (8) and a previous value. ($T_{d(prev)}$) of the target torque, and

determining a displacement demand $D_p$ of the hydraulic pump (12) based on the target torque ($T_d$) of the hydraulic pump and an oil pressure ($P_s$) in the high pressure oil line (16); and

adjusting displacement of the hydraulic pump (12) to the displacement demand $D_p$.

**Patentansprüche**

1. Vorrichtung zur Stromerzeugung aus erneuerbarer Energie, die Strom aus einer erneuerbaren Energiequelle erzeugt und die umfasst:

   eine Drehwelle (8), die von der erneuerbaren Energiequelle angetrieben wird;
   eine Hydraulikpumpe (12) vom Typ einer Pumpe mit variabler Verdrängung, die von der Drehwelle (8) angetrieben wird;
   einen Hydraulikmotor (14), der von unter Druck stehendem Öl angetrieben wird, das von der Hydraulikpumpe (12) zugeführt wird;
   einen Generator (20), der mit dem Hydraulikmotor (14) verbunden ist;
   eine Hochdruckölleitung (16), durch die eine Abgabeseite der Hydraulikpumpe (12) in einer Fluidkommunikation mit einer Zulaufseite des Hydraulikmotors (14) steht;
   eine Einheit (44) zur Bestimmung einer Pumpanforderung, die eine Verdrängungsanforderung $D_p$ der Hydraulikpumpe (12) auf der Grundlage eines Zieldrehmoments ($T_d$) der Hydraulikpumpe (12) und eines Öldrucks in der Hochdruckölleitung (16) bestimmt; und
   eine Pumpsteuereinheit (46), die die Verdrängung der Hydraulikpumpe (12) an die bestimmte Verdrängungsanforderung $D_p$ anpasst;
   eine Einheit (42) zur Bestimmung eines Zieldrehmoments, die das Zieldrehmoment ($MT_i$) der Hydraulikpumpe (12) auf der Grundlage eines idealen Drehmoments ($T_i$) der Drehwelle, bei dem ein Leistungskoeffizient ($C_p$) ein Maximum wird, bestimmt; und
   eine Einheit (43) zur Korrektur des Zieldrehmoments, die das Zieldrehmoment ($MT_i$), das durch die Einheit (42) zur Bestimmung eines Zieldrehmoments bestimmt wird, gemäß einer Differenz korrigiert, die durch ein Subtrahieren des bestimmten Zieldrehmoments ($MT_i$) von einer Summe ($T_{aero}$) eines Beschleunigungs- und Bremsdrehmoments ($a_r$ x $J_{rotor+pump}$) der Drehwelle (8) und eines vorhergehenden Werts ($T_{d(prev)}$) des Zieldrehmoments erhalten wird.

2. Vorrichtung zur Stromerzeugung aus erneuerbarer Energie nach Anspruch 1, die ferner umfasst:

   ein Drehzahlmesser, das eine Drehzahl der Drehwelle (8) misst; und
   eine Einheit zur Bestimmung eines idealen Drehmoments, die das ideale Drehmoment der Drehwelle gemäß der gemessenen Drehzahl der Drehwelle bestimmt.

3. Vorrichtung zur Stromerzeugung aus erneuerbarer Energie nach Anspruch 2,
   wobei mehrere der Drehzahlmesser bereitgestellt sind, und
   wobei die Einheit zur Bestimmung eines idealen Drehmoments das ideale Drehmoment der Drehwelle gemäß einem Durchschnitt der Drehzahlen der Drehwelle (8) bestimmt, die durch die Drehzahlmesser gemessen werden.

4. Vorrichtung zur Stromerzeugung aus erneuerbarer Energie nach Anspruch 1, die ferner umfasst:

   ein Drehzahlmesser, das die Drehzahl der Drehwelle (8) misst; und
   eine Einheit zur Bestimmung eines idealen Drehmoments, die das ideale Drehmoment der Drehwelle gemäß einer geschätzten Geschwindigkeit eines Energieflusses der erneuerbaren Energiequelle, die aus der gemessenen Drehzahl der Drehwelle (8) geschätzt wird, bestimmt.

5. Vorrichtung zur Stromerzeugung aus erneuerbarer Energie nach Anspruch 4,
   wobei mehrere der Drehzahlmesser bereitgestellt sind, und
   wobei die geschätzte Geschwindigkeit des Energieflusses aus einem Durchschnitt der Drehzahlen der Drehwelle (8), die durch die Drehzahlmesser gemessen werden, geschätzt wird.

6. Vorrichtung zur Stromerzeugung aus erneuerbarer Energie nach Anspruch 1, die ferner umfasst:

ein Durchflussgeschwindigkeitsmesser, das eine Geschwindigkeit des Energieflusses der erneuerbaren Energiequelle misst; und

eine Einheit zur Bestimmung eines idealen Drehmoments, die das ideale Drehmoment der Drehwelle (8) gemäß der gemessenen Geschwindigkeit des Energieflusses bestimmt.

7. Vorrichtung zur Stromerzeugung aus erneuerbarer Energie nach Anspruch 6,
wobei mehrere der Durchflussgeschwindigkeitsmesser bereitgestellt sind, und
wobei die Einheit zur Bestimmung eines idealen Drehmoments das ideale Drehmoment der Drehwelle (8) gemäß einem Durchschnitt der Geschwindigkeiten des Energieflusses bestimmt, die durch die Durchflussgeschwindigkeitsmesser gemessen werden.

8. Vorrichtung zur Stromerzeugung aus erneuerbarer Energie nach Anspruch 1,
wobei die Einheit zur Korrektur des Zieldrehmoments das Zieldrehmoment, das durch die Einheit zur Bestimmung eines Zieldrehmoments bestimmt wird, korrigiert, indem ein Korrekturwert $T_{feedforward}$, der durch ein Multiplizieren der Differenz mit einer Verstärkung G abgeleitet wird, von dem Zieldrehmoment, das durch die Einheit zur Bestimmung eines Zieldrehmoments bestimmt wird, subtrahiert wird.

9. Vorrichtung zur Stromerzeugung aus erneuerbarer Energie nach Anspruch 2,
wobei die Einheit zur Bestimmung eines Zieldrehmoments das Zieldrehmoment der Hydraulikpumpe durch ein Multiplizieren des idealen Drehmoments der Drehwelle (8) mit einem Skalenfaktor M bestimmt, wobei M eine Zahl zwischen 0 und 1 ist.

10. Vorrichtung zur Stromerzeugung aus erneuerbarer Energie nach Anspruch 1, die ferner umfasst:

einen Umgebungstemperatursensor, der die Umgebungstemperatur der Vorrichtung zur Stromerzeugung misst, wobei das ideale Drehmoment der Drehwelle (8) auf der Grundlage der gemessenen Umgebungstemperatur korrigiert wird.

11. Vorrichtung zur Stromerzeugung aus erneuerbarer Energie nach Anspruch 1,
wobei die Einheit zur Bestimmung einer Pumpanforderung die Verdrängungsanforderung $D_p$ der Hydraulikpumpe durch Dividieren des Zieldrehmoments der Hydraulikpumpe durch den Öldruck in der Hochdrucköllleitung bestimmt.

12. Vorrichtung zur Stromerzeugung aus erneuerbarer Energie nach Anspruch 1, die ferner umfasst:

eine Einheit zur Korrektur einer Pumpanforderung, die die Verdrängungsanforderung $D_p$ der Hydraulikpumpe (12) derart korrigiert, dass der Öldruck in der Hochdrucköllleitung (16) innerhalb eines vorgegebenen Bereichs fällt.

13. Vorrichtung zur Stromerzeugung aus erneuerbarer Energie nach Anspruch 1, die ferner umfasst:

einen Öltemperatursensor, der eine Öltemperatur in der Hochdrucköllleitung (16) misst; und
eine Einheit zur Korrektur einer Pumpanforderung, die die Verdrängungsanforderung $D_p$ der Hydraulikpumpe auf der Grundlage der gemessenen Öltemperatur in der Hochdrucköllleitung korrigiert.

14. Vorrichtung zur Stromerzeugung aus erneuerbarer Energie nach Anspruch 1, wobei die Vorrichtung zur Stromerzeugung ein Windturbinengenerator ist, der Energie aus der erneuerbaren Energiequelle Wind erzeugt.

15. Verfahren zum Betreiben einer Vorrichtung zur Stromerzeugung aus erneuerbarer Energie, die umfasst: eine Drehwelle (8), die von der erneuerbaren Energiequelle angetrieben wird; eine Hydraulikpumpe (12) vom Typ einer Pumpe mit variabler Verdrängung, die von der Drehwelle angetrieben wird; einen Hydraulikmotor (14), der von unter Druck stehendem Öl angetrieben wird, das von der Hydraulikpumpe (12) zugeführt wird; einen Generator (20), der mit dem Hydraulikmotor (14) verbunden ist; eine Hochdrucköllleitung (16), durch die eine Abgabeseite der Hydraulikpumpe (12) in einer Fluidkommunikation mit einer Zulaufseite des Hydraulikmotors (14) steht; und eine Niederdrucköllleitung (18), durch die eine Zulaufseite der Hydraulikpumpe (12) in einer Fluidkommunikation mit einer Abgabeseite des Hydraulikmotors (14) steht, wobei das Verfahren die folgenden Schritte umfasst:

Bestimmen des Zieldrehmoments ($MT_i$) der Hydraulikpumpe (12) auf der Grundlage eines idealen Drehmoment ($T_i$) der Drehwelle (8), bei dem ein Leistungskoeffizient ($C_p$) ein Maximum wird,

Korrigieren des Zieldrehmoments ($MT_i$), das durch eine Einheit (42) zur Bestimmung eines Zieldrehmoments bestimmt wird, gemäß einer Differenz, die durch ein Subtrahieren des bestimmten Zieldrehmoments ($MT_i$) von einer Summe ($T_{aero}$) eines Beschleunigungs- und Bremsdrehmoments ($a_r \times J_{rotor+pump}$) der Drehwelle (8) und eines vorhergehenden Werts ($T_{d(prev)}$) des Zieldrehmoments erhalten wird, und

Bestimmen einer Verdrängungsanforderung $D_p$ der Hydraulikpumpe (12) auf der Grundlage des Zieldrehmoments ($T_d$) der Hydraulikpumpe und eines Öldrucks ($P_S$) in der Hochdruckölleitung (16); und

Anpassen der Verdrängung der Hydraulikpumpe (12) an die Verdrängungsanforderung $D_p$.

**Revendications**

1. Appareil de production d'énergie du type énergie renouvelable qui produit de l'énergie à partir d'une source d'énergie renouvelable, comprenant :

   un arbre tournant (8) entraîné par la source d'énergie renouvelable ;
   une pompe hydraulique (12) du type à cylindrée variable entraînée par l'arbre tournant (8) ;
   un moteur hydraulique (14) qui est entraîné par de l'huile pressurisée alimentée depuis la pompe hydraulique (12) ;
   une génératrice (20) raccordée au moteur hydraulique (14) ;
   une canalisation d'huile sous haute pression (16) à travers laquelle un côté refoulement de la pompe hydraulique (12) est en communication fluidique avec un côté admission du moteur hydraulique (14) ;
   une unité de détermination de demande de pompe (44) qui détermine une demande de déplacement $D_p$ de la pompe hydraulique (12) en se basant sur un couple cible ($T_d$) de la pompe hydraulique (12) et sur une pression d'huile dans la canalisation d'huile sous haute pression (16) ; et
   un dispositif de commande de pompe (46) qui règle le déplacement de la pompe hydraulique (12) sur la demande de déplacement déterminée $D_p$ ;
   une unité de détermination de couple cible (42) qui détermine le couple cible ($MT_i$) de la pompe hydraulique (12) en se basant sur un couple idéal ($T_i$) de l'arbre tournant auquel un coefficient de puissance ($C_p$) devient maximum, et
   une unité de correction de couple cible (43) qui corrige le couple cible ($MT_i$) déterminé par l'unité de détermination du couple cible (42) en fonction d'une différence obtenue en soustrayant le couple cible déterminé ($MT_i$) d'une somme ($T_{aero}$) d'un couple d'accélération et de décélération ($a_r \times J_{rotor+pump}$) de l'arbre tournant (8) et d'une valeur antérieure ($T_{d(prev)}$) du couple cible.

2. Appareil de production d'énergie du type énergie renouvelable selon la revendication 1, comprenant en outre :

   un appareil de mesure de vitesse de rotation qui mesure une vitesse de rotation de l'arbre tournant (8) ;
   une unité de détermination de couple idéal qui détermine le couple idéal de l'arbre tournant en fonction de la vitesse de rotation mesurée de l'arbre tournant.

3. Appareil de production d'énergie du type énergie renouvelable selon la revendication 2,
   dans lequel une pluralité d'appareils de mesure de vitesse de rotation sont prévus, et
   dans lequel l'unité de détermination de couple idéal détermine le couple idéal de l'arbre tournant en fonction d'une moyenne des vitesses de rotation de l'arbre tournant (8) mesurées par les appareils de mesure de vitesse de rotation.

4. Appareil de production d'énergie du type énergie renouvelable selon la revendication 1, comprenant en outre :

   un appareil de mesure de vitesse de rotation qui mesure une vitesse de rotation de l'arbre tournant (8) ; et
   une unité de détermination de couple idéal qui détermine le couple idéal de l'arbre tournant en fonction d'une vitesse estimée du flux d'énergie de la source d'énergie renouvelable estimée à partir de la vitesse de rotation mesurée de l'arbre tournant (8).

5. Appareil de production d'énergie du type énergie renouvelable selon la revendication 4,
   dans lequel une pluralité d'appareils de mesure de vitesse de rotation sont prévus, et
   dans lequel la vitesse estimée du flux d'énergie est estimée à partir d'une moyenne des vitesses de rotation de l'arbre tournant (8) mesurées par les appareils de mesure de vitesse de rotation.

6. Appareil de production d'énergie du type énergie renouvelable selon la revendication 1, comprenant en outre :

   un appareil de mesure de vitesse de flux qui mesure une vitesse du flux d'énergie de la source d'énergie renouvelable ; et
   une unité de détermination de couple idéal qui détermine le couple idéal de l'arbre tournant (8) en fonction de la vitesse mesurée du flux d'énergie.

7. Appareil de production d'énergie du type énergie renouvelable selon la revendication 6,
   dans lequel une pluralité d'appareils de mesure de vitesse de flux sont prévus, et
   dans lequel l'unité de détermination du couple idéal détermine le couple idéal de l'arbre tournant (8) en fonction d'une moyenne des vitesses du flux d'énergie mesurées par les appareils de mesure de flux d'énergie.

8. Appareil de production d'énergie du type énergie renouvelable selon la revendication 1,
   dans lequel l'unité de correction du couple cible corrige le couple cible déterminé par l'unité de détermination du couple cible en soustrayant une valeur de correction $T_{feedforward}$ obtenue en multipliant la différence par un gain G par rapport au couple cible déterminé par l'unité de détermination du couple cible.

9. Appareil de production d'énergie du type énergie renouvelable selon la revendication 2,
   dans lequel l'unité de détermination du couple cible détermine le couple cible de la pompe hydraulique en multipliant le couple idéal de l'arbre tournant (8) par un facteur d'échelle M, M étant un nombre situé entre 0 et 1.

10. Appareil de production d'énergie du type énergie renouvelable selon la revendication 1, comprenant en outre :

    un capteur de température ambiante qui mesure la température ambiante de l'appareil de production d'énergie,
    dans lequel le couple idéal de l'arbre tournant (8) est corrigé en se basant sur la température ambiante mesurée.

11. Appareil de production d'énergie du type énergie renouvelable selon la revendication 1,
    dans lequel l'unité de détermination de la demande de pompe détermine la demande de déplacement $D_p$ de la pompe hydraulique en divisant le couple cible de la pompe hydraulique par la pression d'huile dans la canalisation d'huile sous haute pression.

12. Appareil de production d'énergie du type énergie renouvelable selon la revendication 1, comprenant en outre :

    une unité de correction de demande de pompe qui corrige la demande de déplacement $D_p$ de la pompe hydraulique (12) de manière à ce que la pression d'huile dans la canalisation d'huile sous haute pression (16) tombe dans les limites d'une plage prescrite.

13. Appareil de production d'énergie du type énergie renouvelable selon la revendication 1, comprenant en outre :

    un capteur de température d'huile qui mesure une température de l'huile dans la canalisation d'huile sous haute pression (16) ; et
    une unité de correction de demande de pompe qui corrige la demande de déplacement $D_p$ de la pompe hydraulique en se basant sur la température de l'huile dans la canalisation d'huile sous haute pression.

14. Appareil de production d'énergie du type énergie renouvelable selon la revendication 1, cet appareil de production d'énergie étant un aérogénérateur qui produit de l'énergie à partir du vent comme source d'énergie renouvelable.

15. Procédé d'utilisation d'un appareil de production d'énergie du type énergie renouvelable qui comprend :

    un arbre tournant (8) entraîné par la source d'énergie renouvelable ; une pompe hydraulique (12) du type à cylindrée variable entraînée par l'arbre tournant ; un moteur hydraulique (14) qui est entraîné par de l'huile pressurisée alimentée depuis la pompe hydraulique (12) ; une génératrice (20) raccordée au moteur hydraulique (14) ; un canalisation d'huile sous haute pression (16) à travers laquelle un côté refoulement de la pompe hydraulique (12) est en communication fluidique avec un côté admission du moteur hydraulique (14) ; et une canalisation d'huile sous basse pression (18) à travers laquelle un côté admission de la pompe hydraulique (12) est en communication fluidique avec un côté refoulement du moteur hydraulique (14), ce procédé comprenant les étapes consistant à :

déterminer le couple cible ($MT_i$) de la pompe hydraulique (12) en se basant sur un couple idéal ($T_i$) de l'arbre tournant (8) auquel un coefficient de puissance ($C_p$) devient maximum,

corriger le couple cible ($MT_i$) déterminé par une unité de détermination de couple cible (42) en fonction d'une différence obtenue en soustrayant le couple cible déterminé ($MT_i$) d'une somme ($T_{aero}$) d'un couple d'accélération et de décélération ($a_r \times J_{rotor+pump}$) de l'arbre tournant (8) et d'une valeur antérieure ($T_{d(prev)}$) du couple cible, et à

déterminer une demande de déplacement $D_p$ de la pompe hydraulique (12) en se basant sur le couple cible ($T_d$) de la pompe hydraulique et sur une pression d'huile ($P_s$) dans la canalisation d'huile sous haute pression (16), et à

régler le déplacement de la pompe hydraulique (12) sur la demande de déplacement $Dp$.

[Fig. 1]

[Fig. 2]

[Fig. 3]

[Fig. 4]

[Fig. 5]

Start

Measure $W_r$ of rotor — S1

Determine $T_i$ at which $C_p$ is max from $W_r$ — S2

Calculate $MT_i$ by multiplyling $T_i$ by M — S3

Calculate $a_r$ from $W_r$ — S4

Calculate $T_{aero} = J_{rotor+pump} + T_{d(prev)}$ — S5

Calculate $T_{excess} = T_{aero} - MT_i$ — S6

Calculate $T_{feedforward} = GT_{excess}$ — S7

Calculate $T_d = MT_i + T_{feedforward}$ — S8

Determine $D_p$ of pump from $T_d$ and $P_s$ — S9

Adjust displacement of pump to $D_p$ — S10

End

[Fig. 6]

[Fig. 7]

[Fig. 8]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4280061 A
- US 20100040470 A
- US 4496847 B